# EUROPÄISCHE PATENTSCHRIFT

(11) **EP 1 654 606 B1**
(45) Veröffentlichungstag und Bekanntmachung des Hinweises auf die Patenterteilung: **24.01.2007**
(21) Anmeldenummer: 04764076.8
(22) Anmeldetag: 13.08.2004
(51) Int. Cl.: G05F 1/563, H02M 3/335, H02M 3/156

(54) **SCHALTUNGSANORDNUNG UND VERFAHREN ZUR SPANNUNGSVERSORGUNG**
CIRCUIT ARRANGEMENT AND POWER SUPPLY METHOD
DISPOSITIF DE MONTAGE ET PROCEDE D'ALIMENTATION DE TENSION

(30) Priorität: 15.08.2003 DE 10338272
(43) Veröffentlichungstag der Anmeldung: 10.05.2006
(73) Patentinhaber: ATMEL Germany GmbH, 74072 Heilbronn (DE)
(72) Erfinder: DRUSENTHAL, Ullrich, 74076 Heilbronn (DE)
(86) Internationale Anmeldenummer: PCT/EP2004/009079
(87) Internationale Veröffentlichungsnummer: WO 2005/017637

(56) Entgegenhaltungen:
- EP-A- 0 696 841
- US-A- 4 459 537
- TRAVIS B: "LINEAR VS SWITCHING SUPPLIES: WEIGHING ALL THE OPTIONS" EDN ELECTRICAL DESIGN NEWS, CAHNERS PUBLISHING CO. NEWTON, MASSACHUSETTS, US, Januar 1998 (1998-01), Seiten 40-54, XP000769896 ISSN: 0012-7515
- WILLIAMS J: "ASTUTE DESIGNS IMPROVE EFFICIENCIES OF LINEAR REGULATORS" EDN ELECTRICAL DESIGN NEWS, CAHNERS PUBLISHING CO. NEWTON, MASSACHUSETTS, US, Bd. 34, Nr. 17, 17. August 1989 (1989-08-17), Seiten 151-158, XP000048697 ISSN: 0012-7515

## Beschreibung

Die Erfindung bezieht sich auf eine Schaltungsanordnung zur Spannungsversorgung nach dem Oberbegriff des Anspruchs 1 sowie auf ein Verfahren zur Erzeugung einer Versorgungsspannung nach dem Oberbegriff des Anspruchs 10.

Bei batterieversorgten Systemen besteht in Fällen, in denen starke Schwankungen der Batteriespannung auftreten, oftmals der Bedarf, daraus eine stabile System- oder Versorgungsspannung zu erzeugen. Die Batteriespannung schwankt insbesondere in Kraftfahrzeugen stark und kann zeitweise, beispielsweise bei einem Start- bzw. Anlassvorgang des Kraftfahrzeugs, geringer sein als die gewünschte Versorgungsspannung. Zu diesem Zweck sind Schaltungsanordnungen zur batteriebasierten Spannungsversorgung gebräuchlich, die einen oder mehrere Linearregler umfassen, die eine präzise und stabile Versorgungsspannung beispielsweise für Sensoren, Analogschaltungsteile und Mikroprozessoren erzeugen, die im wesentlichen frei von störenden Restwelligkeiten oder sogenannten "Rippeln" ist. Da Linearregler aufgrund ihres inneren Aufbaus eine Eingangsspannung benötigen, die höher als die Ausgangsspannung ist, und ihre Verlustleistung von der Spannungsdifferenz zwischen Eingangs- und Ausgangsspannung und einer Ausgangslast abhängt, werden Schaltregler zwischen Batterie und Linearregler eingefügt. Schaltregler eignen sich zur verlustleistungsarmen Erzeugung einer Ausgangsspannung, die deutlich höher oder geringer als die Eingangsspannung sein kann. Ihre Ausgangsspannung weist jedoch üblicherweise eine gewisse Restwelligkeit auf, so dass sie häufig nicht direkt zur Erzeugung einer Versorgungsspannung eines hierfür empfindlichen Schaltungsteils geeignet ist.

Eine solche schaltungsanordnung ist aus US-A-4,459,537 bekannt.

Wenn die Eingangsspannung sowohl größer als auch kleiner als die aus ihr zu erzeugende Spannung sein kann, werden Schaltregler verwendet, die sowohl in Aufwärtsrichtung als auch in Abwärtsrichtung regeln können. Beispiele hierfür sind die sogenannten Single-Ended-Primary-Inductance-Converter(SEPIC), Flyback-Wandler sowie Sperr-Wandler.

Die Ausgangsspannung des Schaltreglers, die als Eingangsspannung des oder der Linearregler dient, wird zur Minimierung der Verlustleistung derart eingestellt, dass sich zwischen Eingangs- und Ausgangsspannung des Linearreglers eine möglichst geringe Spannungsdifferenz einstellt, beispielsweise ca. 1,5V.

Ein Linearregler umfasst üblicherweise ein ansteuerbares Lastelement in Form eines NMOS-Transistors, der mit der Ausgangsspannung des Schaltreglers beaufschlagt wird, als Stellglied und ein Steuerelement zur Ansteuerung des Transistors. Der Transistor ist in einen Laststrompfad zwischen den Ausgang des Schaltreglers und das oder die zu versorgenden Systeme eingeschleift. Die Baugröße des Transistors hängt stark von seiner Gate-Source-Spannung ab. Herkömmlicherweise wird das Steuerelement mit der auch am Transistor anliegenden Spannung versorgt, wodurch die Gate-Source-Spannung des Linearreglers begrenzt und eine minimale Baugröße festgelegt ist.

Die Ausgangsspannung des Schaltreglers kann auch zur Versorgung weiterer Schaltungsteile dienen, die ein ansteuerbares Lastelement aufweisen, welches mit der Ausgangsspannung beaufschlagt wird. Hierbei kann es sich beispielsweise um einen Motorregler handeln, der über ein Lastelement in Form eines Leistungstransistors mit der Ausgangsspannung betrieben wird. Auch hier hängt die minimale Baugröße des Leistungstransistors wiederum stark von seiner Gate-Source-Spannung ab.

Der Erfindung liegt als technisches Problem die Bereitstellung einer Schaltungsanordnung und eines Verfahrens der eingangs genannten Art zugrunde, welche mit relativ geringem Aufwand realisierbar und in der Lage sind, bei geringer Verlustleitung eine stabile Versorgungsspannung zu liefern, insbesondere auch aus einer Batterie mit merklichen Batteriespannungsschwankungen. Weiterhin ist es wünschenswert, die Baugröße der verwendeten Lastelemente zu minimieren.

Die Erfindung löst dieses Problem durch die Bereitstellung einer Schaltungsanordnung mit den Merkmalen des Anspruchs 1 sowie eines Verfahrens mit den Merkmalen des Anspruchs 10.

Die erfindungsgemäße Schaltungsanordnung umfasst einen Schaltregler, der zusätzlich zu einer ersten, geregelten Spannung eine zweite, insbesondere ungeregelte, Spannung erzeugt, die direkt oder indirekt als Versorgungsspannung für das erste Steuerelement dient. Das erste Steuerelement kann mit dieser Versorgungsspannung unabhängig von der ersten Spannung eine Ansteuerspannung für das Lastelement derart einstellen, dass sich ein günstiger Wirkungsgrad ergibt und die Baugröße des oder der Lastelemente reduziert wird.

In einer Weiterbildung der Schaltungsanordnung nach Anspruch 2 ist die zweite Spannung größer als die erste Spannung. Dies ermöglicht die Ansteuerung des Lastelements mit Ansteuerspannungen, die größer als die am Laststrompfad anliegenden Spannungen sind.

In einer Weiterbildung der Schaltungsanordnung nach Anspruch 3 bilden das ansteuerbare Lastelement und das erste Steuerelement einen ersten, linearen Spannungsregler zur Erzeugung einer dritten, geregelten Spannung aus der ersten Spannung. Dies ermöglicht die Erzeugung präziser Spannungen mit geringer Restwelligkeit bei gleichzeitig hohem Wirkungsgrad.

In einer Weiterbildung der Schaltungsanordnung nach Anspruch 4 umfasst der Schaltregler ein zweites Steuerelement und die zweite Spannung dient direkt oder indirekt als dessen Versorgungsspannung. Das zweite Steuerelement kann beispielsweise zur internen Ansteuerung des Schaltreglers dienen und einen oder mehrere Komparatoren, Sägezahngeneratoren sowie Operationsverstärker beinhalten. Die Versorgung durch die zweite Spannung erleichtert ein Anlaufen des Schaltreglers bei niedrigen Eingangsspannungen.

In einer Weiterbildung der Schaltungsanordnung nach Anspruch 5 umfasst die Schaltungsanordnung einen zweiten, vorzugsweise linearen, Spannungsregler, der aus der zweiten Spannung eine Versorgungsspannung für das erste Steuerelement und/oder ein zweites Steuerelement erzeugt. Dies ermöglicht bei Bedarf die Erzeugung weiterer präziser Spannungen zur internen Versorgung. Da die Leistungsentnahme aus dem zweiten Spannungsregler üblicherweise klein ist, bleibt die durch ihn bedingte Verlustleistung gering.

In einer Weiterbildung der Schaltungsanordnung nach Anspruch 6 sind ein erstes Gleichrichterelement, insbesondere eine Diode, in Durchlassrichtung und ein Glättungskondensator in Serie zwischen einen Verbindungspunkt einer Eingangsinduktivität und eines Schaltmittels und ein Bezugspotential des Schaltreglers eingeschleift, wobei die zweite Spannung am Verbindungspunkt von erstem Gleichrichterelement und Glättungskondensator ansteht. Die Spannung am Verbindungspunkt der Eingangsinduktivität und des Schaltmittels weist im Betrieb periodische Spannungsspitzen auf, die im wesentlichen der Summe aus Ein- und Ausgangsspannung des Schaltreglers entsprechen. Die zweite Spannung wird hieraus mit Hilfe des ersten Gleichrichterelements und des Glättungskondensators gewonnen und ist größer als die Eingangsspannung bzw. die Ausgangsspannung des Schaltreglers.

In einer Weiterbildung der Schaltungsanordnung nach Anspruch 7 ist zwischen einen Eingangsanschluss und einen Knoten des Schaltreglers, an dem die zweite Spannung ansteht, ein zweites Gleichrichterelement, insbesondere eine Diode, in Durchlassrichtung eingeschleift. Das zweite Gleichrichterelement dient zum Anlaufen des Schaltreglers, wenn die Eingangsspannung angelegt wird. Dann kann eine eventuell noch nicht anstehende bzw. zu niedrige zweite Spannung durch die Eingangsspannung ersetzt werden, die über das zweite Gleichrichterelement durchgeschaltet wird.

In einer vorteilhaften Schaltungsrealisierung bildet nach Anspruch 8 das Lastelement einen Emitterfolger oder Sourcefolger.

In weiteren vorteilhaften Schaltungsrealisierungen ist nach Anspruch 9 der Schaltregler als SEPIC-, Flyback- oder Sperr-Wandler ausgebildet. Mit Hilfe derartiger Wandler können Ausgangsspannungen erzeugt werden, die je nach Bedarf höher oder niedriger als deren Eingangsspannung sind.

Beim erfindungsgemäßen Verfahren wird eine zweite, insbesondere ungeregelte, Spannung durch den Schaltregler zur Versorgung des ersten Steuerelements erzeugt.

In einer Weiterbildung des Verfahrens nach Anspruch 11 werden die erste und die zweite Spannung derart erzeugt, dass die zweite Spannung größer als die erste Spannung ist.

In einer Weiterbildung des Verfahrens nach Anspruch 12 wird das ansteuerbare Lastelement derart durch die erste Steuereinheit angesteuert, dass aus der ersten Spannung eine dritte, geregelte Spannung erzeugt wird.

In einer Weiterbildung des Verfahrens nach Anspruch 13 wird ein zweites Steuerelement, durch das der Schaltregler intern angesteuert wird, direkt oder indirekt durch die zweite Spannung versorgt.

In einer Weiterbildung des Verfahrens nach Anspruch 14 wird aus der zweiten Spannung eine Versorgungsspannung für das erste Steuerelement und/oder das zweite Steuerelement erzeugt.

Vorteilhafte Ausführungsformen der Erfindung sind in den Zeichnungen dargestellt und werden nachfolgend beschrieben. Hierbei zeigen schematisch:
- Fig. 1: ein Blockschaltbild einer Schaltungsanordnung zur Spannungsversorgung,
- Fig. 2: ein Schaltbild einer Schaltungsanordnung zur Spannungsversorgung mit einem Schaltregler vom SEPIC-Typ und
- Fig. 3: ein Schaltbild einer Schaltungsanordnung zur Spannungsversorgung mit einem Schaltregler vom Flyback-Typ.

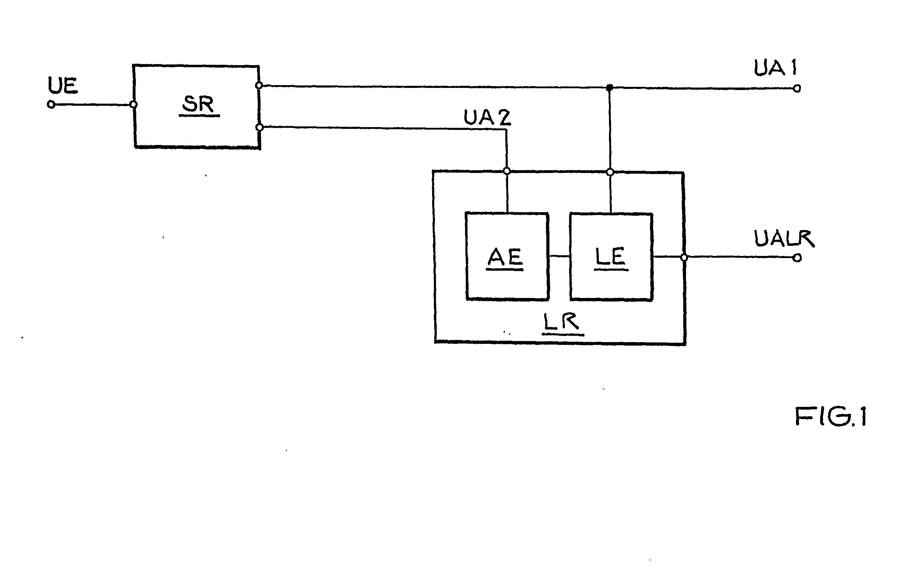

Fig. 1 zeigt ein Blockschaltbild einer Schaltungsanordnung zur Spannungsversorgung mit einem Schaltregler SR, der aus einer Eingangsspannung UE eine erste, geregelte Spannung UA1 und eine zweite ungeregelte Spannung UA2 erzeugt, und einem Linearregler LR. Der Linearregler LR umfasst ein ansteuerbares Lastelement LE, das mit der ersten Spannung UA1 des Schaltreglers SR beaufschlagt wird, und ein Steuerelement AE zur Ansteuerung des Lastelements LE. Das Steuerelement AE steuert das Lastelement LE derart an, dass aus der ersten Spannung UA1 des Schaltreglers SR eine geregelte Spannung UALR mit geringer Restwelligkeit erzeugt wird, die zur Versorgung nicht gezeigter empfindlicher, nachgeschalteter Schaltungsteile dienen kann. Die zweite Spannung UA2 des Schaltreglers SR dient zur Versorgung des Steuerelements AE.

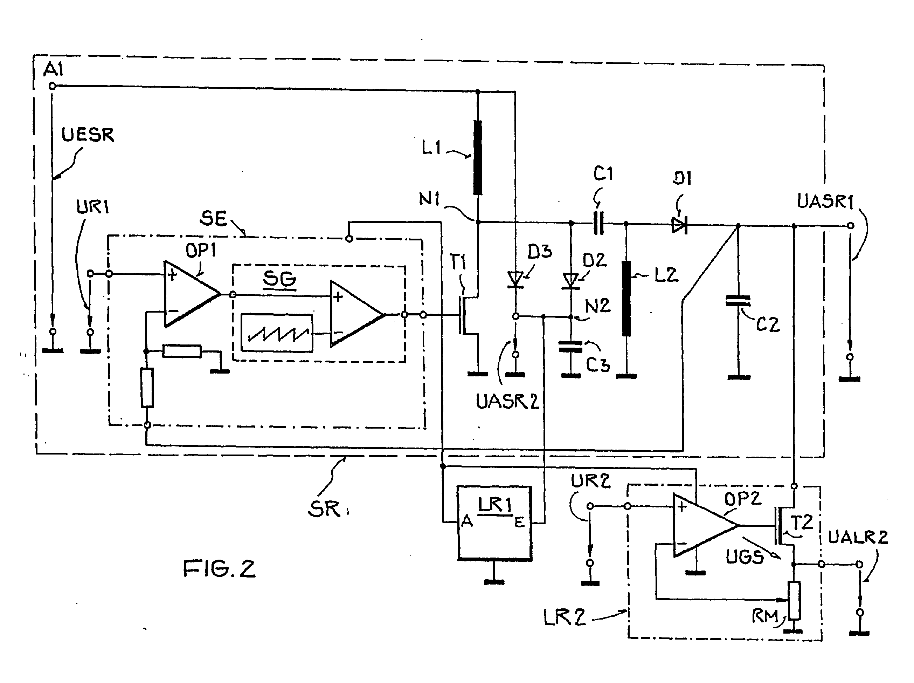

Bei der in Fig. 2 gezeigten Schaltungsanordnung ist der Schaltregler SR von Fig. 1 als Wandler vom SEPIC-Typ ausgebildet. Der Schaltregler SR erzeugt aus einer von einer nicht gezeigten Batterie bereitgestellten Eingangsspannung UESR eine geregelte Ausgangsspannung UASR1, die höher oder niedriger als die Eingangsspannung UESR gewählt werden kann. Eine Eingangsinduktivität L1 und ein Schaltmittel in Form eines Transistors T1 sind in Serie zwischen einen Eingangsanschluss A1 des Schaltreglers SR und Masse eingeschleift. Der Transistor T1 wird durch eine Steuereinheit SE mit einem pulsweitenmodulierten Signal angesteuert.

Zur Erzeugung des Ansteuersignals umfasst die Steuereinheit SE einen Fehlerverstärker in Form eines Operationsverstärkers OP1 und einen Sägezahngenerator SG. An einem ersten Eingang des Operationsverstärkers OP1 liegt eine erste Referenzspannung UR1, die als Sollwert für die Ausgangsspannung UASR1 des Schaltreglers SR dient, und an einem zweiten Eingang des Operationsverstärkers OP1 die Ausgangsspannung UASR1 an, die geeignet durch einen Spannungsteiler heruntergeteilt ist. Das Tastverhältnis des pulsweitenmodulierten Ansteuersignals des Transistors T1 wird derart durch die Steuereinheit SE eingestellt, dass sich der gewünschte Betrag der Ausgangsspannung UASR1 ergibt. Der Schaltregler SR umfasst weiterhin in der für Wandler vom SEPIC-Typ üblichen Beschaltung Kondensatoren C1 und C2, eine Induktivität L2 und eine Diode D1.

Zur Erzeugung einer zweiten, ungeregelten Ausgangsspannung UASR2 umfasst der Schaltregler SR ein Gleichrichterelement in Form einer weiteren Diode D2 und einen Glättungskondensator C3, die in Serie zwischen einen Verbindungspunkt N1 der Eingangsinduktivität L1 und des ersten Transistors T1 und Masse eingeschleift sind, wobei die zweite Ausgangsspannung UASR2 am Verbindungspunkt N2 der Diode D2 und des Glättungskondensators C3 ansteht. Die Spannung am Verbindungspunkt N1 der Eingangsinduktivität L1 und des Transistors T1 weist im Betrieb periodische Spannungsspitzen auf, die im wesentlichen der Summe aus Eingangsspannung UESR und Ausgangsspannung UASR1 des Schaltreglers SR entsprechen. Die zweite Ausgangsspannung UASR2 des Schaltreglers SR wird hieraus mit Hilfe der Diode D2 und des Glättungskondensators C3 gewonnen und ist größer als die Eingangsspannung UESR und die Ausgangsspannung UASR1 des Schaltreglers.

Zwischen den Eingangsanschluss A1 des Schaltreglers SR und den Knoten N2 ist ein weiteres Gleichrichterelement in Form einer weiteren Diode D3 in Durchlassrichtung eingeschleift. Sie dient zum Anlaufen des Schaltreglers, wenn die Eingangsspannung angelegt wird. Dann kann eine eventuell noch nicht anstehende bzw. zu niedrige zweite Ausgangsspannung UASR2 durch die Eingangsspannung ersetzt werden, die durch die Diode D3 durchgeschaltet wird. Die Diode D3 ist optional und kann in Abhängigkeit von einer einzuhaltenden Spezifikation entfallen.

Aus der zweiten Ausgangsspannung UASR2 des Schaltreglers SR wird mit Hilfe eines linearen Spannungsreglers LR1 eine präzise, restwelligkeitsarme Versorgungsspannung für das Steuerelement SE und für ein Steuerelement eines weiteren linearen Spannungsreglers LR2 erzeugt, das in diesem Beispiel durch einen Operationsverstärker OP2 gebildet ist. Wenn an die Qualität dieser Versorgungsspannung kleinere Anforderungen gestellt werden, kann der Spannungsregler LR1 entfallen und die zweite Versorgungsspannung UASR2 kann direkt als Versorgungsspannung für das Steuerelemente SE und den Operationsverstärker OP2 dienen. Anstatt des Linearreglers LR1 kann auch eine einfachere Stabilisierungsschaltung verwendet werden.

Der Linearregler LR2 dient zur Erzeugung einer Systemspannung UALR2 und umfasst ein ansteuerbares Lastelement in Form eines NMOS-Transistors T2, der an seinem Drain-Anschluss mit der Ausgangsspannung UASR1 des Schaltreglers SR beaufschlagt wird, und den Operationsverstärker OP2, dessen Ausgangsspannung zur Ansteuerung des Transistors T2 dient. Der Transistor T2 bildet einen Laststrompfad zwischen der Ausgangsspannung UASR1 des Schaltreglers SR und der Ausgangsspannung UALR2 des Linearreglers LR2. An einem ersten Eingang des Operationsverstärkers OP2 liegt eine Referenzspannung UR2 an, die zur Einstellung der Ausgangspannung UALR2 dient. An einem zweiten Eingang wird die über einen Messwiderstand RM abgegriffene und bei Bedarf heruntergeteilte Ausgangsspannung UALR2 zurückgekoppelt. Da der Operationsverstärker OP2 mit der Ausgangsspannung des Spannungsreglers LR1 versorgt wird, die größer als die am Drain-Anschluß des Transistors T2 anliegende Ausgangsspannung UASR1 des Schaltreglers ist, ist er ebenfalls in der Lage, Ansteuerspannungen bereitzustellen, die größer als die Ausgangsspannung UASR1 sind. Die maximale Gate-Source-Spannung UGS des Transistors T2 kann beispielsweise in Abhängigkeit von der verwendeten Technologie 5V betragen. Der Transistor T2 kann folglich entsprechend klein dimensioniert werden. Insgesamt kann dadurch Chipfläche eingespart werden, wodurch die Herstellungskosten reduziert werden.

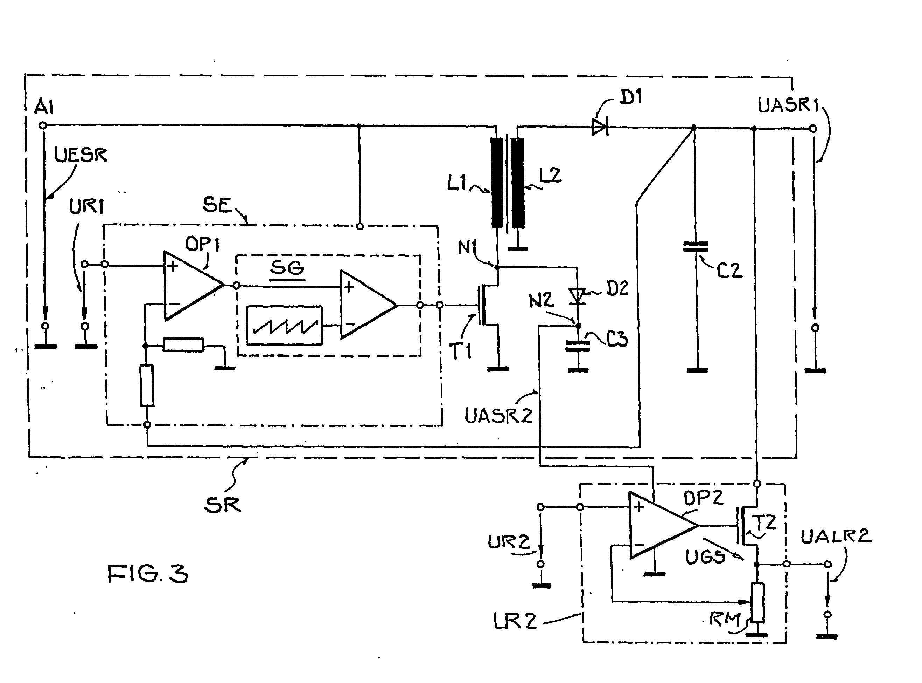

Fig. 3 zeigt eine Schaltungsvariante, bei welcher der Schaltregler SR als sogenannter Flyback-Wandler gebildet ist. Da die Funktion der gezeigten Schaltung im Wesentlichen mit der in Fig. 2 gezeigten übereinstimmt, wird nachfolgend lediglich auf die Unterschiede eingegangen.

Als Versorgungsspannung der Steuereinheit SE dient in diesem Ausführungsbeispiel direkt die Eingangsspannung UESR, die innerhalb der Steuereinheit SE auf einen passenden Wert transformiert wird. Der Linearregler LR1 von Fig. 2 entfällt und die am Knoten N2 anstehende, zweite Spannung UASR2 des Schaltreglers SR dient direkt zur Versorgung des Operationsverstärkers OP2 des linearen Spannungsreglers LR2. Die in Fig. 2 gezeigte Diode D3 entfällt. Die zweite Spannung UASR2 wird durch die Diode D2 und den Kondensator C3 an einer Primärwicklung eines durch die Induktivitäten L1 und L2 gebildeten Transformators abgegriffen.

In den gezeigten Ausführungsbeispielen dient die zweite Ausgangsspannung UA2 bzw. UASR2 des Schaltreglers SR zur Versorgung des Steuerelements AE bzw. Operationsverstärkers OP2 des linearen Spannungsreglers LR bzw. LR2. Aufgrund der im Vergleich zu der ersten Ausgangsspannung UA1 bzw. UASR1 des Schaltreglers höheren Spannung UA2 bzw. UASR2 kann das Lastelement LE bzw. der Transistors T2 kleiner dimensioniert werden.

Die Erfindung ist jedoch nicht auf die gezeigten Ausführungsbeispiele beschränkt. So kann der lineare Spannungsregler LR2 beispielsweise durch einen Regler oder einen Treiberbaustein für einen Elektromotor ersetzt werden, bei dem als Lastelement ein Leistungstransistor in gleicher Weise durch ein geeignetes Steuerelement angesteuert wird.

Der Schaltregler kann selbstverständlich auch allgemein als Sperrwandler ausgeführt sein. Die zweite Spannung wird hierbei grundsätzlich wie gezeigt mit Hilfe eines Gleichrichterelements und eines mit Masse verbundenen Kondensators in Abhängigkeit vom verwendeten Wandler-Typ entweder an einem Knoten zwischen dem Schaltelement und einer Induktivität oder einer Primärwicklung eines Transformators abgegriffen.

Die Erfindung ermöglicht eine wirtschaftlich realisierbare Schaltungsanordnung zur Spannungsversorgung, beispielsweise für Kraftfahrzeuge, da die verwendeten Lastelemente aufgrund ihrer verbesserten Ansteuerung kleiner dimensioniert werden können und die Betriebssicherheit über einen weiten Eingangsspannungsbereich hinweg sichergestellt ist.

## Patentansprüche

1. Schaltungsanordnung zur Spannungsversorgung mit
- einem Schaltregler (SR) zur Erzeugung einer ersten, geregelten Spannung (UA1, UASR1),
- einem ansteuerbaren Lastelement (LE, T2), das mit der ersten geregelten Spannung (UA1, UASR1) beaufschlagt wird, und einem ersten Steuerelement (AE, OP2) zur Ansteuerung des Lastelements (LE, T2),
**dadurch gekennzeichnet, dass**
- der Schaltregler (SR) zur Erzeugung einer zweiten, insbesondere ungeregelten, Spannung (UA2, UASR2) eingerichtet ist, die direkt oder indirekt als Versorgungsspannung für das erste Steuerelement (AE, OP2) dient.

2. Schaltungsanordnung nach Anspruch 1, **dadurch gekennzeichnet, dass** die zweite Spannung (UA2, UASR2) größer als die erste Spannung (UA1, UASR1) ist.

3. Schaltungsanordnung nach Anspruch 1 oder 2, **dadurch gekennzeichnet, dass** das ansteuerbare Lastelement (LE, T2) und das erste Steuerelement (AE, OP2) einen ersten, linearen Spannungsregler (LR, LR2) zur Erzeugung einer dritten, geregelten Spannung (UALR, UALR2) aus der ersten Spannung (UA1, UASR1) bilden.

4. Schaltungsanordnung nach einem der vorhergehenden Ansprüche, **dadurch gekennzeichnet, dass** der Schaltregler ein zweites Steuerelement (SE) umfasst und die zweite Spannung (UA2, UASR2) direkt oder indirekt als Versorgungsspannung für das zweite Steuerelement (SE) dient.

5. Schaltungsanordnung nach einem der vorhergehenden Ansprüche, **gekennzeichnet durch** einen zweiten Spannungsregler (LR1), der aus der zweiten Spannung (UA2, UASR2) eine Versorgungsspannung für das erste Steuerelement (AE, OP2) und/oder ein zweites Steuerelement (SE) erzeugt.

6. Schaltungsanordnung nach einem der vorhergehenden Ansprüche, **dadurch gekennzeichnet, dass** ein erstes Gleichrichterelement (D2) in Durchlassrichtung und ein Glättungskondensator (C3) in Serie zwischen einen Verbindungspunkt (N1) einer Eingangsinduktivität (L1) und eines Schaltmittels (T1) und ein Bezugspotential des Schaltreglers (SR) eingeschleift sind, wobei die zweite Spannung (UA2, UASR2) am Verbindungspunkt (N2) von erstem Gleichrichterelement (D2) und Glättungskondensator (C3) ansteht.

7. Schaltungsanordnung nach einem der vorhergehenden Ansprüche, **dadurch gekennzeichnet, dass** zwischen einen Eingangsanschluss (A1) und einen Knoten (N2) des Schaltreglers (SR), an dem die zweite Spannung (UA2, UASR2) ansteht, ein zweites Gleichrichterelement (D3) in Durchlassrichtung eingeschleift ist.

8. Schaltungsanordnung nach einem der vorhergehenden Ansprüche, **dadurch gekennzeichnet, dass** das Lastelement einen Emitterfolger oder Sourcefolger bildet.

9. Schaltungsanordnung nach einem der vorhergehenden Ansprüche, **dadurch gekennzeichnet, dass** der Schaltregler (SR) als Wandler vom SEPIC-Typ, Flyback- oder Sperr-Wandler ausgebildet ist.

10. Verfahren zur Erzeugung einer Versorgungsspannung, bei dem
- eine erste, geregelte Spannung durch einen Schaltregler (SR) erzeugt wird und
- ein ansteuerbares Lastelement (LE, T2) mit der ersten geregelten Spannung (UA1, UASR1) beaufschlagt und von einem ersten Steuerelement (AE, OP2) angesteuert wird,
**dadurch gekennzeichnet, dass**
- eine zweite, insbesondere ungeregelte, Spannung (UA2, UASR2) durch den Schaltregler (SR) zur Versorgung des ersten Steuerelements (AE, OP2) erzeugt wird.

11. Verfahren nach Anspruch 10, **dadurch gekennzeichnet, dass** die erste und die zweite Spannung derart erzeugt werden, dass die zweite Spannung (UA2, UASR2) größer als die erste Spannung (UA1, UASR1) ist.

12. Verfahren nach Anspruch 10 oder 11, **dadurch gekennzeichnet, dass** das ansteuerbare Lastelement (LE, T2) derart durch die erste Steuereinheit (AE, OP2) angesteuert wird, dass aus der ersten Spannung (UA2, UASR2) eine dritte, geregelte Spannung (UALR, UALR2) erzeugt wird.

13. Verfahren nach einem der Ansprüche 10 bis 12, **dadurch gekennzeichnet, dass** ein zweites Steuerelement (SE), durch das der Schaltregler (SR) intern angesteuert wird, direkt oder indirekt durch die zweite Spannung (UA1, UASR1) versorgt wird.

14. Verfahren nach einem der Ansprüche 10 bis 13, **dadurch gekennzeichnet, dass** aus der zweiten Spannung (UA2, UASR2) eine Versorgungsspannung für das erste Steuerelement (AE, OP2) und/oder das zweite Steuerelement (SE) erzeugt wird.

## Claims

1. Circuit arrangement for voltage supply with
- a switching regulator (SR) for producing a first, regulated voltage (UA1, UASR1),
- a controllable load element (LE, T2), which is acted on by the first regulated voltage (UA1, UASR1), and a first control element (AE, OP2) for controlling the load element (LE, T2),
**characterised in that**
- the switching regulator (SR) is equipped for producing a second, in particular unregulated, voltage (UA2, UASR2), which serves directly or indirectly as voltage supply for the first control element (AE, OP2).

2. Circuit arrangement according to claim 1, **characterised in that** the second voltage (UA2, UASR2) is greater than the first voltage (UA1, UASR1).

3. Circuit arrangement according to claim 1 or 2, **characterised in that** the controllable load element (LE, T2) and the first control element (AE, OP2) form a first, linear voltage regulator (LR, LR2) for producing a third, regulated voltage (UALR, UALR2) from the first voltage (UA1, UASR1).

4. Circuit arrangement according to one of the preceding claims, **characterised in that** the switching regulator comprises a second control element (SE) and the second voltage (UA2, UASR2) serves directly or indirectly as supply voltage for the second control element (SE).

5. Circuit arrangement according to one of the preceding claims, **characterised by** a second voltage regulator (LR1), which generates from the second voltage (UA2, UASR2) a supply voltage for the first control element (AE, OP2) and/or a second control element (SE).

6. Circuit arrangement according to one of the preceding claims, **characterised in that** a first rectifier element (D2) is connected in pass direction and a smoothing capacitor (C3) in series between a junction (N1) of an input inductance (L1) and a switching means (T1) and a reference potential of the switching regulator (SR), wherein the second voltage (UA2, UASR2) is present at the junction (N2) of first rectifier element (D2) and smoothing capacitor (C3).

7. Circuit arrangement according to one of the preceding claims, **characterised in that** a second rectifier element (D3) is connected in pass direction between an input terminal (A1) and a junction (N2) of the switching regulator (SR), at which the second voltage (UA2, UASR2) is present.

8. Circuit arrangement according to one of the preceding claims, **characterised in that** the load element forms an emitter-follower or source-follower.

9. Circuit arrangement according to one of the preceding claims, **characterised in that** the switching regulator (SR) is constructed as a converter of SEPIC type, flyback converter or blocking converter.

10. Method of producing a supply voltage in which
- a first, regulated voltage is produced by a switching regulator (SR) and
- a controllable load element (LE, T2) is acted on by the first regulated voltage (UA1, UASR1) and controlled by a first control element (AE, OP2),
**characterised in that**
- a second, in particular unregulated, voltage (UA2, UASR2) is produced by the switching regulator (SR) for supply of the first control element (AE,OP2).

11. Method according to claim 10, **characterised in that** the first and the second voltage are produced in such a manner that the second voltage (UA, UASR2) is greater than the first voltage (UA, UASR1).

12. Method according to claim 10 or 11, **characterised in that** the controllable load element (LE, T2) is controlled by the first control unit (AE, OP2) in such a manner that a third, regulated voltage (UALR, UALR2) is produced from the first voltage (UA2, UASR2).

13. Method according to one of claims 10 to 12, **characterised in that** a second control element (SE), by which the switching regulator (SR) is internally controlled, is supplied directly or indirectly by the second voltage (UA, UASR1).

14. Method according to one of claims 10 to 13, **characterised in that** a supply voltage for the first control element (AE, OP2) and/or the second control element (SE) is produced from the second voltage (UA2, UASR2).

## Revendications

1. Circuit pour l'alimentation en tension comprenant
. un régulateur de tension (SR) pour générer une première tension régulée (UA1, UASR1)
. un élément de charge (LE, T2) excitable, que l'on soumet à la première tension régulée (UA1, UASR1), et un premier élément d'excitation (AE, OP2) pour exciter l'élément de charge (LE, T2),
**caractérisé en ce que**
. le régulateur de tension (SR) est monté pour générer une deuxième tension (UA2, UASR2), notamment non régulée, servant directement ou indirectement de tension d'alimentation pour le premier élément d'excitation (AE, OP2).

2. Circuit selon la revendication 1, **caractérisé en ce que** la deuxième tension (UA2, UASR2) est supérieure à la première tension (UA1, UASR1).

3. Circuit selon la revendication 1 ou 2, **caractérisé en ce que** l'élément de charge (LE, T2) excitable et le premier élément d'excitation (AE, OP2) constituent un premier régulateur linéaire de tension (LR, LR2) pour générer une troisième tension régulée (UALR, UALR2) à partir de la première tension (UA1, UASR1).

4. Circuit selon l'une quelconque des revendications précédentes, **caractérisé en ce que** le régulateur de tension comprend un deuxième élément d'excitation (SE) et **en ce que** la deuxième tension (UA2, UASR2) sert directement ou indirectement de tension d'alimentation pour le deuxième élément d'excitation (SE).

5. Circuit selon l'une quelconque des revendications précédentes, **caractérisé par** un deuxième régulateur de tension (LR1), qui génère à partir de la deuxième tension (UA2, UASR2) une tension d'alimentation pour le premier élément d'excitation (AE, OP2) et/ou un deuxième élément d'excitation (SE).

6. Circuit selon l'une quelconque des revendications précédentes, **caractérisé en ce qu'**un premier élément redresseur (D2) est inséré passant et qu'un condensateur de filtrage (C3) est inséré en série entre un point de liaison (N1) d'une inductance d'entrée (L1) et d'un moyen de commutation (T1) et un potentiel de référence du régulateur de tension (SR), la deuxième tension (UA2, UASR2) existant au point de liaison (N2) d'un premier élément redresseur (D2) et d'un condensateur de filtrage (C3).

7. Circuit selon l'une quelconque des revendications précédentes, **caractérisé en ce qu'**entre une connexion d'entrée (A1) et un noeud (N2) du régulateur de tension (SR) où existe la deuxième tension (UA2, UASR2) est inséré un deuxième élément redresseur (D3).

8. Circuit selon l'une quelconque des revendications précédentes, **caractérisé en ce que** l'élément de charge constitue un émetteur-suiveur ou source-suiveur.

9. Circuit selon l'une quelconque des revendications précédentes, **caractérisé en ce que** le régulateur de tension (SR) est conformé en transducteur du type SEPIC, Flyback ou convertisseur indirect.

10. Procédé de génération d'une tension d'alimentation, dans lequel
. on génère une première tension régulée au moyen d'un régulateur de tension (SR)
et
. on soumet un élément de charge (LE, T2) excitable à la première tension régulée (UA1, UASR1) et on l'excite au moyen d'un premier élément d'excitation (AE, OP2),
**caractérisé en ce que**
. une deuxième tension (UA2, UASR2), notamment non régulée, est générée par le régulateur de tension (SR) pour l'alimentation du premier élément d'excitation (AE, OP2).

11. Procédé selon la revendication 10, **caractérisé en ce que** la première et la deuxième tension sont générées de telle façon que la deuxième tension (UA2, UASR2) est supérieure à la première tension (UA1, UASR1).

12. Procédé selon la revendication 10 ou 11, **caractérisé en ce que** l'élément de charge excitable (LE, T2) est excité par la première unité d'excitation (AE, OP2) de telle manière qu'une troisième tension régulée (UALR, UALR2) est générée à partir de la première tension (UA2, UASR2).

13. Procédé selon l'une quelconque des revendications 10 à 12, **caractérisé en ce qu'**un deuxième élément d'excitation (SE), par lequel le régulateur de tension (SR) est excité de manière interne, est alimenté directement ou indirectement par la deuxième tension (UA1, UASR1).

14. Procédé selon l'une quelconque des revendications 10 à 13, **caractérisé en ce qu'**à partir de la deuxième tension (UA2, UASR2) on génère une tension d'alimentation pour le premier élément d'excitation (AE, OP2) et/ou le deuxième élément d'excitation (SE).
